# EUROPEAN PATENT APPLICATION

(11) **EP 1 583 334 A1**
(43) Date of publication of application: **05.10.2005**
(21) Application number: 04425249.2
(22) Date of filing: 02.04.2004
(51) Int. Cl.: H04M 1/60, G11B 23/04

(54) **Hands-free kit for a mobile phone comprising an audio cassette-like device for insertion in an audio cassette player**

(71) Applicant: Istituto Superiore Mario Boella sulle Tecnologie dell'Informazione e delle Telecomunicazioni, 10129 Torino (IT)
(72) Inventor: Buresta, Alessandro, 58100 Grosseto (IT)
(74) Representative: Jorio, Paolo

(57) **Abstract**

A kit for an audio cassette player, including a device (2) designed for insertion inside an audio cassette seat of the audio cassette player (20) and having an electromagnetic transducer (11) designed to communicate with a magnetic head of the audio cassette player (20); and a wireless communication module (4). The device (2) has a slot (3) accessible from outside the device (2), connected electrically to the electromagnetic transducer (11), and designed to receive the wireless communication module (4); and the wireless communication module (4) is designed for insertion into and removal from the slot (3) from outside the device (2).

## Description

The present invention relates to an audio cassette-like device for insertion in an audio cassette slot of an audio cassette player, and to a kit for the audio cassette player.

As is known, use of cellular telephones in vehicles has created numerous problems as regards safety, ease of use, and audio quality.

In particular, use of cellular telephones while driving is a serious driving hazard by distracting the driver's attention from the road, so much so that, in many countries, it is only permitted using on-vehicle speaker (so-called "handsfree") devices enabling the driver to speak freely without using his/her hands, and so drive safely.

Numerous devices of this sort have been proposed.

US 2003/0224726, for example, describes an audio cassette-like device featuring an integrated Bluetooth module for wireless communication with nearby enabled Bluetooth devices.

The above device is designed for insertion inside a conventional audio cassette player , in particular a car radio, and or Bluetooth communication with a cellular telephone in the passenger compartment of the vehicle.

More specifically, the device comprises a transducer circuit for converting the signal received by the Bluetooth module into a magnetic signal which can be read in the normal way by the magnetic heads on the audio cassette player and broadcast over the on-vehicle radio loudspeakers. When the cellular telephone rings, the driver simply inserts the audio cassette into the audio cassette player, and the Bluetooth module interfaces automatically with the cellular telephone.

The device described constitutes an effective vehicle speaker device, but has the drawback of not being configurable, and of being bound strictly to one specific communication protocol (Bluetooth). In particular, a device of this sort must be replaced whenever changes are made to the cellular telephone wireless communication protocol.

It is an object of the present invention to overcome the above drawbacks, and to further improve audio cassette-like devices for insertion in a conventional audio cassette player.

According to the present invention, there are provided a kit for an audio cassette player, as claimed in Claim 1, and a device for an audio cassette player, as claimed in Claim 16.

A preferred, non-limiting embodiment of the present invention will be described by way of example with reference to the accompanying drawings, in which:
Figure 1 shows a kit for an audio cassette player, in accordance with a preferred embodiment of the present invention;
Figure 2 shows an overall block diagram of an audio cassette-like device forming part of the Figure 1 kit.

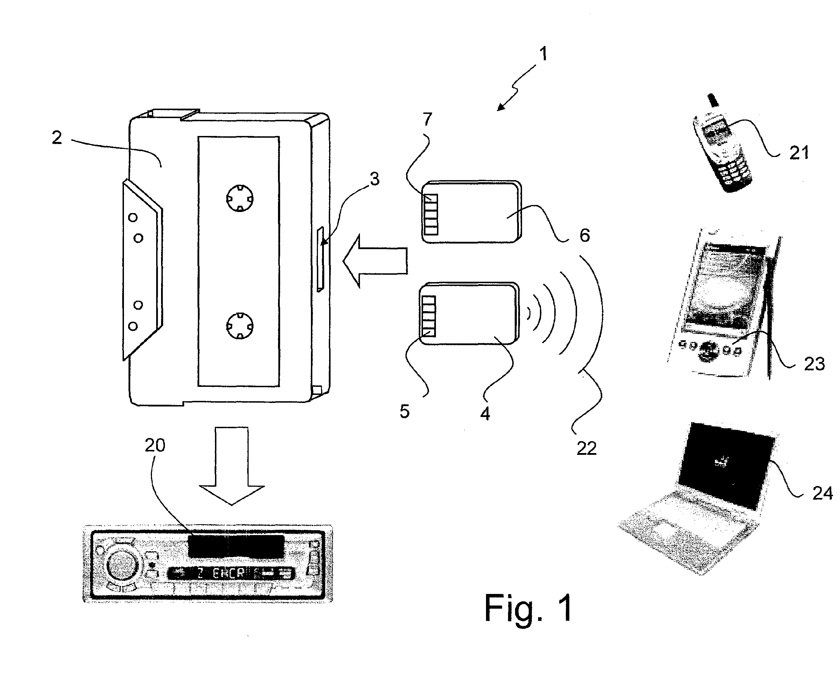

With reference to Figure 1, a kit 1 for an audio cassette player 20 comprises a device 2 of external dimensions, shape, and form factor compatible with those of a conventional magnetic tape audio cassette, so as to be insertable inside the audio cassette slot of audio cassette player 20.

According to one aspect of the invention, device 2 has a slot 3, i.e. a connector with electric contacts, accessible from outside device 2, and into which is insertable an electronic card having corresponding electric contacts.

Kit 1 also comprises a wireless communication module 4 having electric contacts 5 and configured so as to be insertable inside and removable from slot 3 from the outside of device 2.

More specifically, wireless communication module 4 is similar in shape and size to conventional memory cards, and contains a wireless communication interface of any known type (e.g. Wi-Fi, Bluetooth, 802.15.3, IrDa, etc.), preferably a short-range radio communication interface, such as a Bluetooth interface with a "Headset - HSP" and "Intercom Profile - IntP" profile.

Wireless communication module 4 may conveniently be retained in and released from slot 3 using straightforward releasable click-on coupling means of the type commonly used in memory card slots of many currently marketed electronic devices - therefore not described in detail - and by which communication module 4 engages and is released from slot 3 by simply exerting pressure on wireless communication module 4.

Kit 1 may comprise an optional electronic card 6, also having electric contacts 7, such as an XD (Extreme Digital) or SD (Secure Digital) memory card containing audio files in compressed digital form, such as MP3, WAV, AAC, etc., or a smart card containing an integrated memory and microprocessor, which may be inserted inside slot 3 instead of wireless communication module 4.

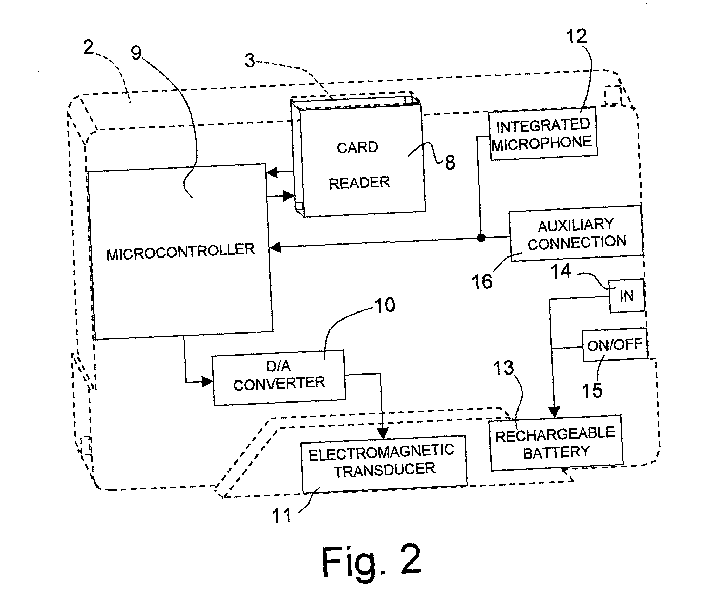

Figure 2 shows an overall block diagram of device 2.

As shown in Figure 2, device 2 comprises a multistandard reader 8 connected to slot 3, i.e. a reader capable of interfacing with and reading data from both a wireless communication module and electronic cards of the type described above; a digital/analog converter 10; an electromagnetic transducer 11; a microphone 12; and a microcontroller circuit 9 connected to reader 8, to microphone 12, and to electromagnetic transducer 11 via digital/analog converter 10.

Microcontroller circuit 9 may comprise, for example, a microprocessor, a state machine, a DSP (Digital Signal Processor), an ASIC (Application Specific Integrated Circuit), etc.

Electromagnetic transducer 11 is located so as to be aligned and in contact with the magnetic head (not shown) of audio cassette player 20 when device 2 is inserted inside the audio cassette slot of audio cassette player 20, and is configured to convert electric signals supplied to digital/analog converter 10 into standard magnetic signals which can be picked up by the magnetic head of audio cassette player 20 in known manner, and therefore not described in detail.

In one possible embodiment, electromagnetic transducer 11 comprises a magnetic core (not shown) with a gap, and a coil (not shown) wound about the core. A time-variable current circulating in the coil produces in the gap a corresponding time-variable magnetic field having the same characteristics as the variable magnetic field generated by movement of an audio cassette magnetic tape.

Device 2 also comprises a rechargeable battery 13 for supplying the various electric components of device 2; and a current outlet 14 connected to battery 13 and designed to receive a plug (not shown) in turn connected to an external power source (e.g. a vehicle cigarette lighter outlet) to recharge battery 13.

Device 2 also comprises an on/off switch 15; and an auxiliary connector 16 connected to microcontroller circuit 9, e.g. for connection of an external microphone (not shown).

An optional port (not shown) may also be provided to connect microcontroller circuit 9 to a display (not shown) of audio cassette player 20.

In actual use, microcontroller circuit 9 receives the electric signals supplied by reader 8, and generates digital audio signals which are converted to analog form by D/A converter 10 and then converted by electromagnetic transducer 11 into magnetic signals which can be picked up by the magnetic head of audio cassette player 20. The electric signals generated by the magnetic head are then broadcast into the surrounding environment by an appropriate sound broadcasting system (loudspeakers).

Kit 1 according to the invention has numerous applications. In particular, kit 1 provides for playing audio signals from various sources by means of a conventional audio cassette player 20.

When a memory card containing audio files in compressed digital form is inserted inside slot 3, audio cassette player 20 may be used to play the audio files. That is, when the memory card is inserted inside slot 3, and device 2 inside the audio cassette slot of audio cassette player 20, microcontroller circuit 9 performs appropriate decompression and/or decryption operations to convert the compressed digital audio files memorized in the memory card into a sequence of digital audio samples. The resulting samples are then converted into analog signals by D/A converter 10, and sent to electromagnetic transducer 11 which converts them into magnetic signals which can be picked up by the magnetic head of audio cassette player 20. The electric signals generated by the magnetic head are then broadcast into the surrounding environment by the loudspeakers connected to audio cassette player 20.

Electronic microcontroller circuit 9 may also record digital audio files in the memory card inserted inside slot 3. In which case, microcontroller circuit 9 receives analog audio signals generated by microphone 12 or by an external microphone connected to auxiliary connector 16, and, after processing and converting them into the desired digital form (MP3, WAV, etc.), memorizes them in the memory card.

If a wireless communication module 4 is inserted inside slot 3, audio cassette player 20 may be used to broadcast into the surrounding environment sound signals from electronic devices present in the surrounding environment and having the same wireless communication interface.

As shown in Figure 1, kit 1 according to the invention provides for obtaining a wireless vehicle speaker system of good audio quality by interfacing a cellular telephone 21, present inside the passenger compartment of the vehicle, directly to the amplification system of audio cassette player 20.

In which case, a wireless communication module having the same wireless interface as cellular telephone 21, typically a Bluetooth interface, need simply be inserted inside slot 3 of device 2, and device 2 inserted inside the audio cassette slot of audio cassette player 20.

In actual use, when a telephone call is received, cellular telephone 21 receives radio-frequency signals from the telephone network in known manner; and the Bluetooth interface of cellular telephone 21 converts the incoming radio-frequency signals into signals of a frequency compatible with the Bluetooth transmission (signals of around 2.4 GHz frequency) and transmits them over a Bluetooth communication channel 22.

Short-range communication module 4 receives the signals representing voice data received by cellular telephone 21, and transmits them to microcontroller circuit 9, which processes and transmits them to electromagnetic transducer 11 via D/A converter 10, which in turn converts the incoming signals into magnetic signals which can be picked up by the head of audio cassette player 20, thus enabling the user of the vehicle to listen to the telephone call over the on-vehicle loudspeakers.

Microphone 12, or an external microphone connected to auxiliary connector 16, picks up the sound signals generated by the user, and transmits them to wireless communication module 4, which in turn transmits them to cellular telephone 21, at a frequency compatible with the Bluetooth transmission, over Bluetooth communication channel 22.

Signal transmission from cellular telephone 21 to wireless communication module 4 may conveniently be performed automatically when a telephone call is received, or may be enabled by the driver pressing a confirm key on cellular telephone 21.

Similarly, a wireless communication module 4, having a Bluetooth or any other short-range radio communication interface and inserted inside device 2, may interface with a PDA (Personal Digital Assistant) 23, a portable computer (Notebook) 24 or MP3 reader, or other similar devices (not shown) having the same radio communication interface.

Audio files memorized in the above devices can thus be received over Bluetooth communication channel 22 and broadcast by the loudspeakers connected to audio cassette player 20. Voice commands of a GPS navigation system installed on portable computer 24 or PDA 23 may also be advantageously received and played.

In addition to digital audio files, wireless communication module 4 may also be configured to receive data in other forms, such as text files, which may be converted into audio signals by a Text-to-Speech application resident in microcontroller circuit 9, or be shown on the display of audio cassette player 20.

Wireless communication module 4 may advantageously also receive audio signals transmitted by sources outside the passenger compartment of the vehicle, in particular, information or advertising announcements in the vicinity of areas appropriately equipped for this purpose, such as supermarket car-parks, motorway toll booths, etc.

Wireless communication module 4 may even receive and play the soundtrack of a drive-in film inside the passenger compartment of the vehicle.

Finally, wireless communication module 4 may even permit interphone communication between two vehicles equipped with a kit 1 according to the invention, providing the vehicles are less than a predetermined maximum distance apart depending on the radio communication standard employed.

The advantages of the present invention will be clear from the foregoing description.

Clearly, changes may be made to the kit as described and illustrated herein without, however, departing from the scope of the present invention as defined in the accompanying Claims.

## Claims

1. A kit (1) for an audio cassette player (20), comprising:
- a device (2) designed for insertion inside an audio cassette slot of said audio cassette player (20), and having an electromagnetic transducer (11) designed to communicate with a magnetic head of said audio cassette player (20); and
- a wireless communication module (4);
**characterized in that** said device (2) has a slot (3) accessible from outside said device (2), connected to said electromagnetic transducer (11), and designed to receive said wireless communication module (4);
and **in that** said wireless communication module (4) is designed for insertion into and removal from said slot (3) from outside said device (2).

2. A kit as claimed in Claim 1, wherein said device (2) is similar in shape and size to a conventional audio cassette.

3. A kit as claimed in Claim 1 or 2, wherein said slot (3) is also designed to receive conventional memory cards.

4. A kit as claimed in any one of the foregoing Claims, wherein said wireless communication module (4) is similar in shape and size to conventional memory cards.

5. A kit as claimed in any one of the foregoing Claims, wherein said wireless communication module comprises radio communication means (4).

6. A kit as claimed in Claim 5, wherein said radio communication means (4) operate with a Bluetooth protocol.

7. A kit as claimed in Claim 5 or 6, wherein said radio communication means (4) are designed to automatically detect the presence of radio communication devices (21, 23, 24) within a receiving range of said radio communication means (4), to automatically detect communication commenced by said radio communication devices (21, 23, 24), and to establish radio communication with said radio communication devices (21, 23, 24) over a radio communication network (22).

8. A kit as claimed in Claim 7, wherein said radio communication devices (21, 23, 24) comprise at least one of the following:
- a cellular telephone (21);
- a digital personal assistant (23); and
- a portable computer (24).

9. A kit as claimed in any one of the foregoing Claims, wherein said electromagnetic transducer (11) is designed to convert electric signals to magnetic signals which can be picked up by said magnetic head of said audio cassette player (20).

10. A kit as claimed in any one of the foregoing Claims, wherein said device (2) also comprises:
- first interface means (8, 9, 10) interposed between said slot (3) and said electromagnetic transducer (11) to convert signals supplied by said wireless communication module (4) to electric signals for said electromagnetic transducer (11).

11. A kit as claimed in any one of the foregoing Claims, wherein said device (2) also comprises:
- a microphone (12) connected to said slot (3).

12. A kit as claimed in any one of the foregoing Claims, and also comprising:
- a memory card (4) insertable into and removable from said slot (3) from outside said device (2), and designed to memorize audio files in digital form.

13. A kit as claimed in Claim 12, wherein said device (2) also comprises:
- second interface means (8, 9, 10) interposed between said slot (3) and said electromagnetic transducer (11) to convert signals supplied by said memory card (4) to electric signals for said electromagnetic transducer (11).

14. A kit as claimed in Claim 13, wherein said second interface means comprise memory card multistandard reading means (8).

15. A kit as claimed in Claim 13 or 14, wherein said second interface means comprise writing means (9) for writing data in said memory card (4).

16. A device (2) for an audio cassette player (20), said device (2) being designed for insertion inside an audio cassette seat of said audio cassette player (20), and having an electromagnetic transducer (11) designed to communicate with a magnetic head of said audio cassette player (20);
**characterized in that** said device (2) has a slot (3) accessible from outside said device (2), connected to said electromagnetic transducer (11), and designed to receive said wireless communication module (4).

17. A device as claimed in Claim 16, wherein said device (2) is similar in shape and size to a conventional audio cassette.

18. A device as claimed in Claim 16 or 17, wherein said slot (3) is designed to receive conventional memory cards (2).

19. A device as claimed in Claim 16, wherein said electromagnetic transducer (11) is designed to convert electric signals to magnetic signals which can be picked up by said magnetic head of said audio cassette player (20).

20. A device as claimed in any one of Claims 16 to 19, and also comprising
- a microphone (12) connected to said slot (3).

21. A device as claimed in any one of Claims 16 to 20, and also comprising:
- interface means (8, 9, 10) interposed between said slot (3) and said electromagnetic transducer (11), and designed to convert signals supplied by said wireless communication module (4) to signals for said electromagnetic transducer (11).

22. A device as claimed in Claim 21, wherein said interface means comprise memory card multistandard reading means (8).

23. A device as claimed in Claim 21 or 22, wherein said interface means comprise writing means (9) for writing data in memory cards (4).
